# EUROPÄISCHE PATENTSCHRIFT

(11) **EP 0 945 412 B1**
(45) Veröffentlichungstag und Bekanntmachung des Hinweises auf die Patenterteilung: **08.10.2003**
(21) Anmeldenummer: 99105606.0
(22) Anmeldetag: 19.03.1999
(51) Int. Cl.: C03C 11/00, C04B 14/24, C04B 38/08, C03B 19/06

(54) **Verbund-Formteil**
Composite shaped article
Pièce moulée composite

(30) Priorität: 23.03.1998 CH 68498
(43) Veröffentlichungstag der Anmeldung: 29.09.1999
(73) Patentinhaber: Viol, Ingeborg, 9410 Heiden (CH)
(72) Erfinder: Viol, Günter Dipl.-Ing., 9410 Heiden (CH)
(74) Vertreter: Römpler, Aldo

(56) Entgegenhaltungen:
- EP-A- 0 010 069
- EP-A- 0 012 114
- EP-A- 0 661 240
- US-A- 3 562 370
- PATENT ABSTRACTS OF JAPAN vol. 098, no. 005, 30. April 1998 (1998-04-30) & JP 10 017380 A (TOTO LTD;CRYSTAL KUREI KK), 20. Januar 1998 (1998-01-20)

## Beschreibung

Die vorliegende Erfindung betrifft ein Verbund-Formteil, ein Verfahren zur Herstellung dieses Verbund-Formteiles und die Verwendung dieses Verbund-Formteiles.

Zur Wärme- und Kälte-Dämmung in Bauwerken werden die verschiedensten Isolierstoffe verwendet. Bekannt sind organische und anorganische Schaumstoffe.

Die organischen Schaumstoffe, wie Kunststoffschäume, haben oft den Nachteil geringer Druckfestigkeit und mangelnder Feuerbeständigkeit. Bei brennenden Kunststoffschäumen werden oft unangenehm riechende und/oder schädliche und/oder giftige Gase freigesetzt.

Anorganische Schaumstoffe, beispielsweise Eruptivgesteine, haben in der Regel eine offene Zellstruktur. Sie haben zudem oft die Nachteile der geringeren Druckfestigkeit, des höheren Raumgewichtes und des grösseren Abriebes und sie sind zum Teil stark strahlend.

Es sind auch anorganische Schaumstoffe bekannt, die auf der Basis eines mineralischen Mehles, zum Beispiel Glasmehl, aufgebaut sind.

Schaumglas und dessen Herstellung sind beispielsweise aus EP 0 010 069, EP 0 012114 und EP 0 661 240 bekannt.

In EP 0 010 069 ist ein Schaumglas-Granulat beschrieben, das als leichter Füllstoff für Kunststoffe oder für Leichtbeton Verwendung finden kann. Dieses durch Ofenblähung erzeugte Schaumglas-Granulat weist eine Korngrösse von 0.2 bis 3 mm auf. Unter Schaumglas-Granulat sind hier kleine geschlossene Rundkörper zu verstehen. Der Durchmesser der grössten Gashohlräume ist im wesentlichen kleiner als 0.1 mm.

Derartige Schaumglas-Granulate sind auch aus EP 0 661 240, aus US 3 562 370 sowie aus Patent abstracts of Japan, Vol. 098, Nr. 005, bekannt. Auch hier sind die Schaumglas-Granulate, bzw. die Schaumglas-Kügelchen, als Leicht-Zuschlagstoffe vorgesehen. Die Schaumglas-Kügelchen sollen, wie oben erwähnt, als Füllstoff in ein Baumaterial wie Beton, Mörtel oder auch Kunststoff geschüttet werden. Dieses Baumaterial soll dadurch einerseits leichter werden, andererseits soll eine Isolationswirkung erzielt werden. Beim Schüttvorgang schwimmen die Schaumglas-Kügelchen im Baumaterial mit, sie können aber mit diesem weder eine mechanische noch eine chemische Verbindung eingehen. Sie haben andere Dehnungs- und Schrumpfungseigenschaften als das sie umgebende Baumaterial. Dadurch bildet sich immer eine mikrofeine Leerschicht um die Schaumglas-Kügelchen, die eine Verbindung verhindert. Zudem sind sie nur scheinbar geschlossene Rundkörper. Tatsächlich hat die oberste Zellschicht feine Öffnungen nach aussen. Hier wird durch das Kapillargesetz Wasser angesaugt, was immer im Baumaterial erhalten bleibt und so dessen statische Belastbarkeit herabsetzt. Nicht zuletzt sind diese Schaumglas-Kügelchen nicht verdichtbar, sie weichen aus. Der Füllungsgrad als Zuschlagstoff kann bei sehr dünnflüssigem Baumaterial nur bei maximal 50 % liegen. Sonst schwimmen die Schaumglas-Kügelchen im Baumaterial nicht mehr mit. Dadurch verlängert sich auch die Abbindezeit.

Aus EP 0 012 114 ist ein feinporiges Schaumglas-Granulat bekannt, das aus Bruchstücken eines Schaumglas-Körpers besteht Dieses Schaumglas-Granulat ist zwar ebenfalls als Zuschlagstoff für Leichtbeton oder dergleichen geeignet, es wird jedoch hauptsächlich für andere Schütt und Füllzwecke verwendet, beispielsweise als isolierende Schüttung um einen im Boden angeordneten Wärmespeicher.

Gegenstand der vorliegenden Erfindung ist indessen nicht Schaumglas-Granulat als solches, sondern ein Verbund-Formteil und seine Herstellung.

Schaumglas-Körper haben eine geschlossene Zellstruktur und weisen eine hohe Druckfestigkeit auf. Durch die Geschlossenporigkeit nimmt Schaumglas kein Wasser auf und die Dämmwirkung bleibt auch bei Nässe erhalten. Weil die einzelnen Zellen klein und geschlossen sind, kann in den Zellen keine Luftumwälzung auftreten, mit welcher die Wärme oder Kälte an benachbarte Zellen weitergegeben werden könnte.

Positive Aspekte bei der Verwendung von Schaumglas als Isoliermaterial sind ideale Wärme- und Kälte-Dämmeigenschaften, ein geringes Gewicht, eine relativ hohe Druckfestigkeit, keine Wasseraufnahme, Unbrennbarkeit nach Schweizer Klasse 6 und Deutscher Klasse A1.

Glasmehl kann gemäss bekannter Technik in offenen Formen zu Blöcken, von z.B. 50 x 50 x 25 cm, geschäumt werden, welche nach dem Abkühlen zu Platten geschnitten werden können.

Negative Aspekte dieses Herstellungsverfahrens sind, dass Schaumglas-Körper in Abhängigkeit ihres Volumens mehr oder weniger lang kontrolliert abgekühlt werden müssen. Die Kühlzeit kann bis 60 Stunden oder noch mehr betragen. Bei einer zu schnellen und/oder unkontrollierten Abkühlung treten innerhalb des Schaumglas-Körpers Spannungen auf, die unweigerlich zu einer Rissbildung führen. Wird ein langsam gekühlter, spannungsfreier, grösserer Schaumglas-Körper erneut erwärmt und anschliessend einer zu schnellen und/oder unkontrollierten Abkühlung unterworfen, dann treten erneut Spannungen auf, die auch zu einer Rissbildung führen.

Aus diesem Grund sind Schaumglasplatten trotz den oben genannten positiven Aspekten nicht immer optimale thermische Isoliermaterialien. Das langsame und kontrollierte Abkühlen ist aufwendig und verteuert das Produkt Ausserdem besteht bei grösseren schaumglasteilen die Gefahr des Verzuges. Solche Teile müssen dann oft aufwendig nachbearbeitet werden, was das Produkt verteuert.

Wenn Schaumglas beispielsweise in einem Durchlaufofen hergestellt wird, dann kann es einer Schockkühlung ausgesetzt werden. Dabei bildet sich eine Vielzahl von Haarrissen und das Schaumglas zerspringt in kleine, unregelmässige Teile, sogenannten Schaumglasschotter oder schaumglassplitt.

Es ist ein Ziel der vorliegenden Erfindung, ein Verbund-Formteil aus kleinen, spannungsfreien Schaumglasteilen, die durch spannungsfreie Binder zusammengehalten werden, zur Verfügung zu stellen, welches die oben genannten positiven Aspekte von Schaumglas bei der Verwendung als Isoliermaterial hat und die negativen Aspekte vermeidet. Dieses Formteil soll preisgünstig, technisch einfach und im technischen Masstab hergestellt werden können. Dieses Formteil soll spannungsfrei sein und auch bei grösseren Temperaturschwankungen, beispielsweise plus/minus 100° C, spannungsfrei bleiben. Dieses Formteil soll in geschlossenen Formen formgenau ohne Nachbearbeitung hergestellt werden können.

Mit dem erfindungsgemässen Verbund-Formteil werden alle obigen Ziele erreicht.

Das erfindungsgemässe Verbund-Formteil ist dadurch gekennzeichnet, dass einzelne anorganische, unregelmässige, scharfkantige, spannungsfreie Schaumkörper ungleicher Grösse in komprimierter Form physisch entweder mit einem oder mehreren anorganischen oder organischen Bindemitteln oder durch Zusammensintern der einzelnen Schaumkörper miteinander verbunden sind, wobei dieser Verbund- Formteil auch bei grösseren Temperaturschwankungen spannungsfrei bleibt.

Anders als beim vorgenannten Stand der Technik, wo das eigentliche Baumaterial beispielsweise Beton oder Kunststoff ist, in welches Baumaterial Schaumglas-Granulat, sprich Schaumglas-Kügelchen, als Zuschlagstoff eingeschüttet werden, welcher Zuschlagstoff in der Praxis höchstens 50 % der Masse ausmachen kann, besteht hier das Baumaterial selbst aus der Menge der anorganischen unregelmässigen, scharfkantigen, spannungsfreien Schaumkörper ungleicher Grösse. Diese sind komprimiert. wie später anhand eines bevorzugten Beispiels erläutert, wird durch das Komprimieren die Masse auf ein kleineres Endmass verdichtet, wodurch sich eine weit höhere Druckfestigkeit ergibt. Das Formteil ist dadurch statisch belastbar und kann somit beispielsweise zur Herstellung tragender Wände verwendet werden. Ein Komprimieren oder statisch Belasten von herkömmlichen, als Zuschlagstoff vorgesehenen Schaumglas-Kügelchen, wäre technisch völlig unmöglich, da diese platzen würden. Der Zuschlagstoff wäre zerstört. Das Bindemittel dient im vorliegenden Verbund-Formteil tatsächlich nur dem Verbinden bzw. Verkleben der Schaumkörper untereinander.

Das erfindungsgemässe Verbund-Formteil ist spannungsfrei und bleibt auch bei grösseren Temperaturschwankungen, beispielsweise plus/minus 100° C, spannungsfrei. Es ist zudem die Herstellung von formgenauen, keiner Nachbearbeitung bedürfenden Formteile möglich.

Nach Anspruch 2 bestehen die Schaumkörper vorzugsweise aus Schaumglas, insbesondere Schaumglassplitt oder Schaumglasschotter. Nach Anspruch 3 weisen sie einen mittleren Durchmesser von 2 mm bis 90 mm auf, vorzugsweise von etwa 4 mm bis etwa 30 mm. Nach Anspruch 4 kann das Bindemittel geschäumt oder ungeschäumt sein. Es kann nach Anspruch 5 anorganisch sein und z.B. aus mit Wasser angerührtem Zement. Gips, Lehm, Ton, Kalksandstein oder Wasserglas bestehen oder nach Anspruch 6 organisch und z.B. ein Thermoplast oder ein Duroplast sein. Die Hohlräume zwischen den einzelnen Schaumkörpern können gemäss Anspruch 7 entweder weitgehend offen oder mit dem Bindemittel geschlossen sein. Der physische Verbund zwischen den Schaumkörpern und dem Bindemittel kann nach Anspruch 8 dadurch erzielt sein, dass das Bindemittel in die an der Abbruchkante angebrochenen, aussen offenen schaumzellen der Schaumkörper eingedrungen ist und die Schaumkörper mechanisch verankert.

Das Verfahren zur Herstellung dieses Verbund-Formteiles ist nach Anspruch 9 dadurch gekennzeichnet, dass man entweder
A) - die Schaumkörper mit dem Bindemittel, ummantelt,
   - die so erhaltenen Teile in einer Form, insbesondere eine aufklappbare Form, dicht packt,
   - diese Packung dann komprimiert,
   - das Bindemittel bei Bedarf aktiviert und abbinden lässt, oder
B) - die Schaumkörper in einer Form, insbesondere eine aufklappbare Form, dicht packt,
   - diese Packung dann komprimiert,
   - das, gegebenenfalls aktivierte, Bindemittel in fliessfähiger Form in die Hohlräume zwischen den einzelnen Schaumkörpern einfliessen lässt oder unter Druck einpresst, oder lagenweise einstreut.
   - das so eingebrachte Bindemittel abbinden lässt, oder
C) - die Schaumkörper in einer feuerfesten Form, insbesondere eine aufklappbare Form, dicht packt,
   - diese Packung komprimiert und unter Hitzeeinwirkung zusammensintern lässt,
   - die Form samt Inhalt in einer vorgegebenen Kühlkurve abkühlt,
und dann das fertige Verbund-Formteil der Form entnimmt.

Ein Beispiel eines Verbund-Formteiles bzw. seiner Herstellung wird im Folgenden näher beschrieben:

1 m³ Schaumgiasschotter bzw. schaumgtassplitt wird mit 100 kg Zement 60 in einem Zwangsmischer mit geringer Wasserzugabe bis zu ungefähr Erdfeuchte während 3 Minuten vermischt

Die fertige Mischung wird in Formen eingefüllt, die ein Endmass von beispielsweise 10x10x10 cm ermöglichen. Die Mischung wird dabei 12 cm hoch eingefüllt und danach auf die 10 cm Endmass verdichtet bzw. komprimiert.

Anschliessend lässt man Austrocknen und Abbinden.

Dieses nach Patentanspruch 10 hergestellte Verbund-Formteil weist eine hohe Druckfestigkeit auf.

## Patentansprüche

1. Verbund-Formteil, **dadurch gekennzeichnet, dass** einzelne anorganische, unregelmässige, scharfkantige, spannungsfreie Schaumkörper ungleicher Grösse In komprimierter Form physisch entweder mit einem oder mehreren anorganischen oder organischen Bindemitteln oder durch Zusammensintern der einzelnen Schaumkörper miteinander verbunden sind, wobei dieser Verbund-Formteil auch bei grösseren Temperaturschwankungen spannungsfrei bleibt

2. Verbund-Formteil nach Anspruch 1, **dadurch gekennzeichnet, dass** die Schaumkörper aus Schaumglas sind, insbesondere Schaumglassplitt oder Schaumglasschotter.

3. Verbund-Formteil nach einem der Ansprüche 1 oder 2, **dadurch gekennzeichnet. dass** die Schaumkörper einen mittleren Durchmesser von 2 mm bis 90 mm, vorzugsweise von etwa 4 mm bis etwa 30 mm, haben.

4. Verbund-Formteil nach einem der Ansprüche 1 bis 3, **dadurch gekennzeichnet, dass** das Bindemittel geschäumt oder ungeschäumt ist.

5. Verbund-Formteil nach einem der Ansprüche 1 bis 4, **dadurch gekennzeichnet, dass** das anorganische Bindemittel aus mit Wasser angerührtem Zement, Gips, Lehm, Ton, Kalksandstein oder Wasserglas besteht.

6. verbund-Formtell nach einem der Ansprüche 1 bis 4, **dadurch gekennzeichnet, dass** das organische Bindemittel ein Thermoplast oder ein Duroplast ist

7. Verbund-Formteil nach einem der Ansprüche 1 bis 6, **dadurch gekennzeichnet, dass** die Hohlräume zwischen den einzelnen Schaumkörpern entweder weitgehend offen oder mit dem Bindemittel geschlossen sind.

8. Verbund-Formtell nach einem der Ansprüche 1 bis 7, **dadurch gekennzeichnet. dass** der physische Verbund zwischen den schaumkörpern und dem Bindemittel dadurch erzielt ist, dass das Bindemittel in die an der Abbruchkante angebrochenen, aussen offenen Schaumzellen der Schaumkörper eingedrungen ist und die Schaumkörper mechanisch verankert.

9. Verfahren zur Herstellung eines Verbund-Formteiles nach Anspruch 1, **dadurch gekennzeichnet, dass** man entweder
A) - die schaumkörper mit dem Bindemitel ummantelt,
- die so erhaltenen Teile in einer Form, insbesondere eine aufklappbare Form, dicht packt,
- diese Packung dann komprimiert,
- das Bindemittel bei Bedarf aktiviert und abbinden lässt, oder
B) - die Schaumkörper in einer Form, insbesondere eine aufklappbare Form, dicht packt,
- diese Packung dann komprimiert,
- das, gegebenenfalls aktivierte, Bindemittel In fliessfähiger Form in die Hohlräume zwischen den einzelnen Schaumkörpern einfliessen lässt oder unter Druck einpresst, oder lagenweise einstreut,
- das so eingebrachte Bindemittel abbinden lässt, oder
C) - die Schaumkörper In einer feuerfesten Form, insbesondere eine aufklappbare Form, dicht packt,
- diese Packung komprimiert und unter Hitzeeinwirkung zusammensintern lässt,
- die Form samt Inhalt in einer vorgegebenen Kühlkurve abkühlt,
und dann das fertige Verbund-Formteil der Form entnimmt.

10. Verfahren nach Anspruch 9, **dadurch gekennzeichnet, dass** die Masse von in einer Form gepackten Schaumkörpern auf ein Endmass komprimiert wird, das kleiner ist, als Volumen der ursprünglichen Packung aus Schaumkörpem oder der ursprünglichen Packung aus mit Bindemittel ummantelten Schaumkörpern.

11. Verwendung des Verbund-Formteiles nach Anspruch 1 zur
- Wärme- und Kälte-Dämmung,
- Herstellung leichter Körper, bis hin zum Schwimmkörper,
- Herstellung statisch belastbarer Körper,
- Herstellung von feuerbeständigen und bei Hitzeeinwirkung nicht Gase freisetzender Körper, oder
- als Wärme und Kälte dämmendes Drainage-Element.

## Claims

1. Composite shaped article, **characterized thus that** single inorganic, irregular shaped, sharp edged, tension free foam bodies of different sizes in compressed form are compounded physically either with one or more inorganic or organic binders, or by sintering together of the single foam bodies, in which this composite shaped article will remain tension free even in larger temperature fluctuations.

2. Composite shaped article according to claim 1, **characterized thus that** the foam bodies are made from foam glass, especially foam glass grit or foam glass gravel.

3. Composite shaped article according to claim 1 or 2, **characterized thus that** the foam bodies have an average diameter of 2 mm to 90 mm, preferably of approximately 4 mm to 30 mm.

4. Composite shaped article according to one of the claims 1 to 3, **characterized thus that** the binder is foamed or not foamed.

5. Composite shaped article according to one of the claims 1 to 4, **characterized thus that** the inorganic binder consists of cement with water, gypsum, loam, clay, calcareous sandstone or sodium silicate.

6. Composite shaped article according to one of the claims 1 to 4, **characterized thus that** the organic binder is a thermoplast or duroplast.

7. Composite shaped article according to one of the claims 1 to 6, **characterized thus that** the hollows between the single foam bodies are either mostly open or filled in with the binder.

8. Composite shaped article according to one of the claims 1 to 7, **characterized thus that** the physical compound between the foam bodies and the binder is achieved in a way that the binder will penetrate into the open foam cells on the outside caused by the braking on the edges, and so give mechanical stability to the foam bodies.

9. Procedure for the production of a composite shaped article according to claim 1, **characterized thus that:**
A) - the foam bodies are jacketed with the binder;
- these parts packed densely, preferably in a mould which opens up;
- the package will be compressed;
- the binder activated if needed, or be left to dry;
or
B) - the foam bodies are packed densely in a mould, preferably in a mould which opens up,
- the package will be compressed,
- the binder, activated if needed, in liquid form will be poured into the hollows between the single foam bodies, or pressed into, or be strewed in in layers,
- the binder will be left to dry,
or
C) - the foam bodies are packed into a fire proof mould, preferably in a mould which opens up,
- the package will be compressed and left to sinter together under heat,
- the mould together with its content will be left to cool according to a given cooling chart,
and then the finished composite shaped article taken out of the mould.

10. Procedure for the production of a composite shaped article according to claim 9, **characterized thus that** the mass of foam bodies packed into a mould are condensed to a final size which is smaller than the volume of the original packing of foam bodies, or the original packing of foam bodies jacketed with binder.

11. Use of the composite shaped article according to claim 1 for:
- Insulation against heat and cold,
- Production of light weight bodies, even floating bodies,
- Production of statically loadable bodies,
- Production of fire proof bodies which will not set free gasses when subjected to heat, or
- as drainage elements insulating against heat and cold.

## Revendications

1. Le corps composite moulé est **caractérisé par le fait que** les différents éléments expansés, inorganiques, irréguliers, aux arêtes vives, exempt de tension et de tailles inégales se sont amalgamés physiquement entre eux sous pression à l' aide d' un ou plusieurs liants inorganiques ou organiques ou par frittage des différents éléments expansés entre eux. Le corps composite moulé demeure exempt de tension même sous l'influence des très fortes variations de température.

2. Le corps composite moulé selon spécification 1 est **caractérisé par le fait que** les éléments expansés se composent de verre expansé, surtout de pierrailles et grenailles de verre expansé.

3. Le corps composite moulé selon l' une des spécifications 1 ou 2 est **caractérisé par** les diamètres moyens des éléments expansés de 2 à 90 mmm, de préférence d' environ 4 à 30 mm.

4. Le corps composite moulé selon l' une des spécifications 1 à 3 est **caractérisé par** un liant expansé ou non-expansé.

5. Le corps composite moulé selon l' une des spécifications 1 à 4 est **caractérisé par** un liant inorganique, consistant en ciment, plâtre, glaise, argile, grés argilo calcaire , gâché avec de l'eau, ou du silicate de sodium,.

6. Le corps composite moulé selon l'une des revendications 1 à 4 est **caractérisé par le fait que** liant organique consiste en une matière thermoplastique ou de résine thermodurcissable.

7. Le corps composite moulé selon l' une des revendications 1 à 6 est **caractérisé par le fait que** les cavités entre les différents éléments expansés soient souvent ouvertes soient fermées par le liant.

8. Le corps composite moulé selon l' une des revendications 1 à 7 est **caractérisé par** l' assemblage physique des éléments expansés avec le liant par la pénétration du liant dans les cellules expansés des arêtes vives qui sont extérieurement ouvertes, ancrant mécaniquement les éléments expansés.

9. La procédure de fabrication d' un corps composite moulé selon la revendication peut être
A. on
enrobe les éléments expansés du liant
empaquette d'une façon dense ces éléments dans une moule avec couvercle
comprime le contenu
active le liant si nécessaire, et laisse faire la prise
ou
B
empaquette les éléments expansés d' une façon dense dans une moule avec couvercle
comprime le contenu
laisse pénétrer le liant si nécessaire activé et dans un état fluide dans les cavités entre les différents éléments expansés
ou on l'injecte sous pression
ou on le répand par couche
laisse faire la prise
ou on
C
empaquette les éléments expansés d' une façon dense dans une moule avec couvercle insensibles au feu
comprime le contenu et le fait se fritter sous influence de chaleur
refroidit la moule et son contenu selon la courbe de refroidissement prescrite
et alors on enlève le corps composite moulé de la moule.

10. La procédure de fabrication selon revendication 9 est **caractérisé par** la compression de la masse des éléments expansés mise dans une moule, à un volume final qui est moindre que le chargement initial des éléments expansés ou le chargement initial des éléments expansés enrobés du liant.

11. Utilisation du corps composite moulé selon revendication 1
* isolation thermique et frigorifique
* fabrication des corps légers jusqu'au corps flottants
* fabrication des corps résistant statiquement aux charges
* fabrication des corps incombustibles et ne pas dégageant des gaz sous l' effet du feu
ou
comme éléments de drainage isolant chaleur et froid
